# EUROPEAN PATENT SPECIFICATION

(11) **EP 1 731 385 B1**
(45) Date of publication and mention of the grant of the patent: **10.09.2008**
(21) Application number: 05708120.0
(22) Date of filing: 03.03.2005
(51) Int. Cl.: B60R 22/20

(54) **GUIDE SYSTEM FOR SEAT BELTS**
FÜHRUNGSSYSTEM FÜR SITZGURTE
SYSTEME DE GUIDAGE POUR CEINTURES DE SECURITE

(30) Priority: 12.03.2004 ES 200400618
(43) Date of publication of application: 13.12.2006
(73) Proprietor: Fundacion Inst. Techno. para seguridad automovil, E-28108 Alcobendas (ES)
(72) Inventor: SATUE VALLVE , Ricard, 43710 Santa Oliva (Tarragona) (ES); SALVACHUA BARCELO, Victor, 43710 Santa Oliva (Tarragona) (ES)
(74) Representative: Esteban Perez-Serrano, Maria Isabel
(86) International application number: PCT/ES2005/070023
(87) International publication number: WO 2005/087551

(56) References cited:
- ES-T3- 2 104 870
- FR-A1- 2 655 300
- JP-A- 53 034 211
- US-A- 3 923 321
- US-A- 5 609 367

## Description

### OBJECT OF THE INVENTION

The present invention relates to a guiding system for safety belts, of the type that comprise two lower anchor points, located on either side of the vehicle occupant, and one deflection point located at the height of the vehicle occupant's shoulder, this deflection point being provided with a height-adjustment device, adapted to redirect the safety belt from one of the lower anchor points to the restraint device, positioning the safety belt diagonally across the passenger's torso.

### BACKGROUND OF THE INVENTION

In order to improve the safety of occupants in transport vehicles, the installation of two- or three-point safety belts on vehicle seats has become commonplace. This is the case of automotive vehicles.

Biomechanical tests have proved that a three-point safety belt provides a greater degree of protection than a two-point belt. It is called a three-point safety belt, of which generally two are lower and are arranged on either side of the vehicle occupant and the third point, which is upper, is located at the height of the vehicle occupant's shoulder. In the event of a sudden speed reduction or crash, the safety belt, which under normal conditions extends and retracts, becomes fixed by the restraint devices, so that the aforementioned three points become three anchor points of the safety belt, which holds the occupant to the vehicle seat.

The lower points are also known as lower anchor points. As regards the third point, in those systems in which the restraint device is not located in the same place, it is called a deflection point, since it redirects the safety belt to the point where the restraint device is located, which is the true anchor point of the vehicle belt. In relation to the moment of impact, however, the third point is also called third anchor point or upper anchor point.

The third point must position the safety belt web diagonally across the torso of the vehicle occupant. If the third point has a fixed arrangement, in the event of an impact the trajectory of the belt web can hinder the effectiveness of the safety belt, or cause injuries to vehicle occupants whose height differs from the average standard that has been used to position what is to be the upper support point for the vehicle occupant at the moment of impact.

There are some embodiments that aim to resolve this problem, especially for persons of short height such as children, which allow redirecting the belt web to ensure its positioning over the vehicle occupant's shoulder. This, however, is achieved with the aid of elements that are external to the safety belt or the vehicle. These repositioners or redirectors of the safety belt web are described in documents US5733004 and US6174032.

The third point, instead of being fixed, consists in some embodiments of a deflection point that is adjustable in height.

Thus, for instance, a height adjustment device for the deflection point of a safety belt is known from documents ES-B1-2026265 and FR-A-2484343, (disclosing all features of the preamble of claim 1), in which a slide moves along a support rod threaded on the deflection adjustment area.

Similarly, a device is known from document FR-A-2482539 for adjusting the deflection point of a safety belt located above the shoulder of a vehicle occupant, in which the anchor point is supported by a slider arranged in a moveable manner on a slide and which can be locked in place by means of a latch that operates jointly with a series of holes made in the slide.

All these devices have drawbacks, such as their low adjustability and complexity, but more importantly, the fact that they require manual adjustment, so that each user must manually set the height of the deflection point to suit his or her size.

In the case of persons who are dependent on others, such as minors, there is the added drawback that it must often be an adult who properly adjusts the safety belt on the minor, and watch that the minor does not inadvertently change the position of the safety belt.

From what has been explained here, there is a noticeable lack of guiding systems for safety belts that are capable of automatically displacing the belt web deflection point, thus adapting its position to the constitution of the user in a simpler, quicker and more accurate way.

### DESCRIPTION OF THE INVENTION

The guiding system for safety belts that is the object of the present invention is disclosed with the aim of supplying a solution to the problems described above. This guiding system for safety belts is of the type that comprise two lower anchor points, located on either side of the vehicle occupant, and one deflection point provided with a height adjustment device adapted to redirect the safety belt from one of the lower anchor points to the restraint device, positioning the safety belt web diagonally across the vehicle occupant's chest and transversally across the lower part of the torso.

In essence, the guiding system for safety belts is **characterised in that** the height adjustment device of the deflection point comprises sliding means that are fixed to the vehicle bodywork or to the relevant side of the vehicle seat, which position the belt web diagonally across the vehicle occupant's chest; and a second deflection point that is fixed and arranged behind the vehicle occupant, and in that the sliding means allow freely displacing the deflection point of the safety belt web, redirecting it from a variable height, automatically adjustable to the vehicle occupant's needs, towards the opposite side of the seat and to the second deflection point, wherefrom the belt web is redirected to the supply and restraint device.

In accordance to a preferred embodiment, the sliding means comprise a sliding plate coupled to the side of the seat, adapted to receive the belt web being freely supported on it, which slides freely, the deflection point adjusting itself automatically.

In accordance with another characteristic of the invention, the second deflection point is located at a height greater than the maximum displacement height of the deflection point on the sliding means.

In a preferred embodiment, the second deflection point is joined to the seat, while in another preferred embodiment the second deflection point is joined to the vehicle.

### DESCRIPTION OF THE DRAWINGS

The present descriptive report is supplemented with a set of figures, which are illustrative of the preferred example and in no way limit the invention.

Figure 1 is a schematic view of an embodiment of the guiding system for safety belts that is the object of the invention.

Figure 2 is a perspective, partially transparent view of a seat provided with a guiding system for safety belts such as the one in Fig. 1, the belt being adjusted to a high position.

Figure 3 is a perspective, also partially transparent view, of the seat shown in Figure 2, and in which the belt is adjusted to a height that is lower than that shown in Figure 2.

### PREFERRED EMBODIMENT OF THE INVENTION

The description that follows refers to the drawings explained above, which allow a detailed understanding of the different parts that make up a guiding system for safety belts such as the one that is the object of the invention.

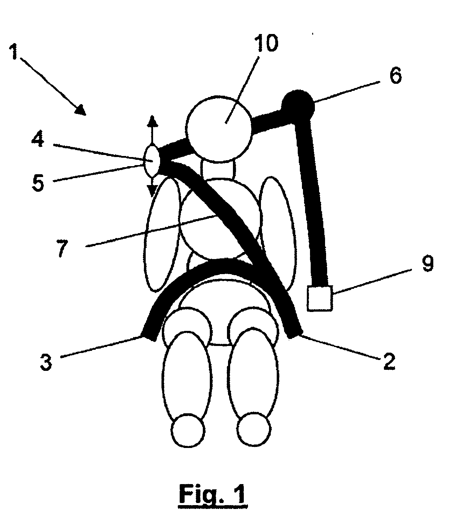

The schematic of Figure 1 shows a system 1 in which the web 7 of a safety belt holds a vehicle occupant 10 to the seat o a vehicle, which is not shown. The guiding system 1 comprises two lower anchor points 2 and 3 and one deflection point 4, which is intended to restrain the vehicle occupant on the seat in the event of a sudden speed reduction or crash.

The deflection point 4 is provided with a height adjustment device 5, which may be arranged on the side of the seat itself or fixed to the vehicle structure. The aforementioned height adjustment device 5 comprises sliding means 8 of the belt web 7 that allow freely displacing the deflection point 4, as is shown by the arrows in the figure. The sliding means can comprise a displaceable guide element or they can consist of a sliding plate on which the belt web can slide freely, as will be explained below.

The deflection point 4 redirects the belt web 7 to a second deflection point 6, which is fixed and located at a greater height than the maximum displacement height of the deflection point 4 on the height adjustment device 5, arranged behind the vehicle occupant 10 and near the opposite side on which the aforementioned device is arranged. The location of the second deflection point 6 allows the automatic adjustment of the deflection point 4, adapting it to the vehicle occupant's height.

It is worth pointing out that the second deflection point 6 can be formed by a simple metal ring that deflects the belt web 7 to the recoil and restraint device 9, which is adapted to instantaneously restrain the belt web 7 when an impact occurs, a device that is not described because it is known and which usually comprises a reel or restraint case. It is also possible that this reel or restraint case can be arranged on the aforementioned second deflection point 6.

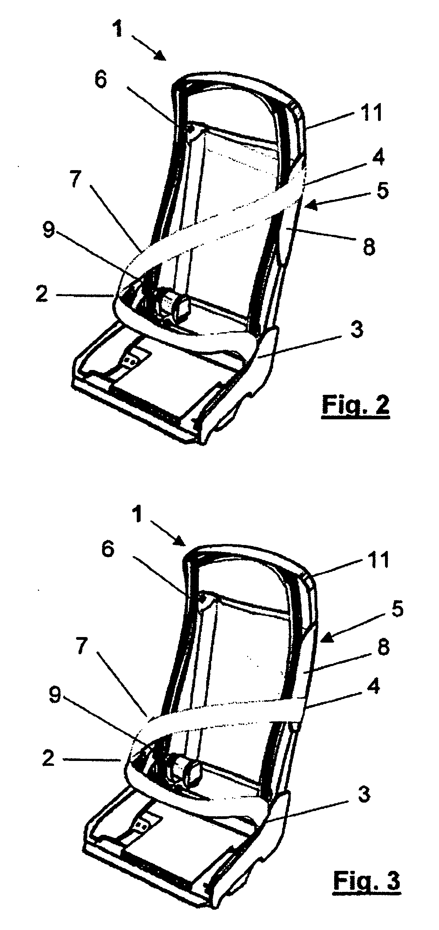

In the same way, there is the possibility that the second deflection point 6 can be arranged on the seat itself, as is shown in Figures 2 and 3, or on any point in the vehicle provided that the second deflection point 6 is placed in such a way that the belt web 7, having passed the deflection point 4, is directed towards the opposite side of the seat on which the height adjustment device 5 is arranged.

At the moment of making the seat safe by means of the safety belt, the user must previously pull the safety belt web 7 in the direction of the lower anchor point 2. The length of the belt web 7 needed will depend on the constitution of the individual, since the belt is placed diagonally across the chest and transversally across the lower part of the torso of the same, as can be seen in Figure 1. As the safety belt web 7 is pulled, it is drawn from the reel or restraint case and slides along the second deflection point 6, which is fixed, in the direction of the deflection point 4, wherefrom it is redirected to the lower anchor point 2, and finally to the anchor point 3. In this process, the rubbing of the safety belt web on the deflection point 4 causes the displacement of the guide element, given the case, of the height adjustment device 5, or the aforementioned belt web slides freely on the sliding means 8, the deflection point 4 being upwardly displaced, if the individual is tall, or downwardly if the individual is short, placing itself automatically at the appropriate height. This movement is shown by means of arrows in Figure 1.

The position of the second deflection point 6 allows the force exerted by the recoil and restraint device 9 to be transmitted to the deflection point 4 from a high position, and forces with an upwardly-directed vertical component to act on the height adjustment device 5.

In the embodiment shown in Figures 2 and 3, in which for purposes of simplification equal number references have been used to designate equal characteristics in respect of the description of the schematic in Figure 1, the sliding means 8 of the height adjustment device 5 consist of a sliding plate, coupled to the side of the seat 11, on which the belt web 7 slides freely, the deflection point 4 thus being displaced.

In Figures 2 and 3, different positions of the deflection point 4 can be seen that allow perfect adjustment of the safety belt web 7 to the user regardless of his or her physical characteristics.

Since it is moveable, the deflection point 4 is freely displaced to its most stable position. Such position is that in which all the forces applied to the point become equal, forces that vary according to how and from which position the belt web is pulled when the belt is adjusted on the chest, that is, according to the size of the user. In this way, the deflection point 4 is automatically positioned, with no need for any intentional action.

The inventor envisages that the section of the belt web 7 that is located between the deflection point 4 and the recoil and restraint case 9 may be exterior or may be arranged totally or partially concealed in the seat backing 11.

The present invention thus allows perfect adjustment of the safety belt automatically adjusting the height of the deflection point 4. In this way the user can use the belt not giving any thought to its adjustment and providing restraint that is better adapted to the individual, resulting in enhanced security in the transport of people, without making inadequate use of the restraint system.

## Claims

1. Guiding system for safety belts, of the type that comprise two lower anchor points (2,3), located at either side of a seat (1) for a vehicle occupant, and a deflection point (4) located at the height of the vehicle occupant's shoulder, this deflection point being provided with a height adjustment device (5), adapted to redirect the safety belt web from one of the lower anchor points to a recoil and restraint device (9), which supplies and keeps the belt web tight in normal conditions and which restrains the supplied section of belt web in the event of a sudden speed reduction or crash, the safety belt web being positioned diagonally across the chest between the deflection point (4) and one of the lower anchor points (2,3) and positioned transversally across the lower part of the vehicle occupant's torso between both lower anchor points (2,3), the height adjustment device (5) of the deflection point (4) comprising sliding means (8) that are fixed to the vehicle bodywork, or to the relevant side of the vehicle seat, which position the belt web diagonally across the vehicle occupant's chest; **characterized by** a second deflection point (6) fixed and arranged behind the vehicle occupant (10), and in that the sliding means (8) allow freely displacement of the deflection point (4) of the safety belt web (7), redirecting the web, from a variable height that is automatically adjustable to the vehicle occupant's needs, to the opposite side of the seat and to the second deflection point (6), wherefrom the belt web (7) is redirected to the supply and restraint device (9).

2. Guiding system for safety belts according to claim 1, **characterised in that** the sliding means (8) comprise a sliding plate coupled to the side of the seat, adapted to receive the belt web (7) being freely supported on it, which slides freely, automatically adjusting the deflection point (4).

3. Guiding system for safety belts according to the preceding claims **characterised in that** the second deflection point (6) is located at a height greater than the maximum displacement height of the deflection point (4) on the sliding means (8).

4. Guiding system for safety belts according to claims 1 to 3, **characterised in that** the second deflection point (6) is joined to the seat.

5. Guiding system for safety belts according to claims 1 to 3, **characterised in that** the second fixed deflection point (6) is joined to the vehicle.

## Patentansprüche

1. Ein Führungssystem für Sicherheitsgurte von der Art, die zwei untere Ankerpunkte (2, 3) besitzt, die sich an jeder Seite eines Sitzes (1) für einen Fahrzeuginsassen befinden, sowie einen Umlenkungspunkt (4), der sich in Schulterhöhe des Fahrzeuginsassen befindet, wobei dieser Umlenkungspunkt mit einem Höhen-Einstellmechanismus (5) ausgerüstet ist, der dazu ausgelegt ist, das Sicherheitsgurtband von einem der unteren Ankerpunkte zu einer Aufspul- und Rückhaltevorrichtung (9) umzuleiten, die das Gurtband unter normalen Bedingungen ausgibt und straff hält und die den Teil des ausgegebenen Gurtbands im Falle einer plötzlichen Geschwindigkeitsreduzierung oder eines Zusammenstoßes zurückhält, wobei das Sicherheitsgurtband diagonal über der Brust zwischen dem Umlenkungspunkt (4) und einem der unteren Ankerpunkte (2, 3) positioniert wird und schräg über dem unteren Teil des Körpers des Fahrzeuginsassen zwischen beiden unteren Ankerpunkten (2, 3) positioniert wird, wobei der Höhen-Einstellmechanismus (5) des Umlenkungspunktes (4) Gleitmittel (8) umfasst, die an der Fahrzeugkarosserie oder an der entsprechenden Seite des Fahrzeugsitzes befestigt sind und die das Gurtband diagonal über der Brust des Fahrzeuginsassen positionieren; **gekennzeichnet durch** einen zweiten Umlenkungspunkt (6), der hinter dem Fahrzeuginsassen (10) befestigt und angeordnet ist, und **dadurch**, dass die Gleitmittel (8) eine freie Verschiebung des Umlenkungspunktes (4) des Sicherheitsgurtbandes (7) erlauben, wobei das Gurtband von einer variablen Höhe, die automatisch auf die Bedürfnisse des Fahrzeuginsassen einstellbar ist, auf die gegenüberliegende Seite des Sitzes und zu dem zweiten Umlenkungspunkt (6) umgeleitet wird, von dem das Gurtband (7) zu der Ausgabe- und Rückhaltevorrichtung (9) umgeleitet wird.

2. Ein Führungssystem für Sicherheitsgurte nach Anspruch 1, **dadurch gekennzeichnet, dass** die Gleitmittel (8) eine Gleitplatte umfassen, die mit der Seite des Sitzes verbunden ist, dazu ausgerichtet, das darauf frei gestützte, frei gleitende Gurtband (7) zu empfangen, wobei der Umlenkungspunkt (4) automatisch eingestellt wird.

3. Ein Führungssystem für Sicherheitsgurte nach dem vorherigen Anspruch, **dadurch gekennzeichnet, dass** sich der zweite Umlenkungspunkt (6) sich auf einer Höhe befindet, die größer als die maximale Verschiebehöhe des Umlenkungspunktes (4) auf den Gleitmitteln (8) ist.

4. Ein Führungssystem für Sicherheitsgurte nach den Ansprüchen 1 bis 3, **dadurch gekennzeichnet, dass** der zweite Umlenkungspunkt (6) mit dem Sitz verbunden ist.

5. Ein Führungssystem für Sicherheitsgurte nach den Ansprüchen 1 bis 3, **dadurch gekennzeichnet, dass** der zweite feste Umlenkungspunkt (6) mit dem Fahrzeug verbunden ist

## Revendications

1. Système de guidage pour ceintures de sécurité, du type de celles qui comprennent deux points d'ancrage inférieurs (2, 3), situés de chaque côté d'un siège (1) prévu pour un occupant du véhicule, et un point de déviation (4) situé à la hauteur de l'épaule de l'occupant du véhicule, ce point de déviation étant pourvu d'un dispositif de réglage de la hauteur (5), adapté pour rediriger la toile de la ceinture de sécurité depuis l'un des points d'ancrage inférieurs jusqu'à un dispositif de rappel et de retenue (9), qui libère et maintient la toile de la ceinture bloquée dans des conditions normales et qui retient la section libérée de la toile de la ceinture en cas de réduction soudaine de la vitesse ou de collision, la toile de la ceinture de sécurité étant positionnée en diagonale en travers du buste entre le point de déviation (4) et l'un des points d'ancrage inférieurs (2, 3) et positionnée transversalement en travers de la partie inférieure du torse de l'occupant du véhicule entre les deux points d'ancrage inférieurs (2, 3), le dispositif de réglage de la hauteur (5) du point de déviation (4) comprenant des éléments coulissants (8) qui sont fixés à la carrosserie du véhicule, ou au côté correspondant du siège du véhicule, qui positionnent la toile de la ceinture en diagonale en travers du buste de l'occupant du véhicule; **caractérisé par** un second point de déviation (6) fixé et disposé derrière l'occupant du véhicule (10), et en ce que les éléments coulissants (8) permettent librement le déplacement du point de déviation (4) de la toile de la ceinture de sécurité (7), redirigeant la toile, depuis une hauteur variable qui s'adapte automatiquement aux besoins de l'occupant du véhicule, jusqu'au côté opposé du siège et jusqu'au second point de déviation (6), à partir duquel la toile de la ceinture (7) est redirigée jusqu'au dispositif de libération et de retenue (9).

2. Système de guidage pour ceintures de sécurité selon la revendication 1, **caractérisé en ce que** les éléments coulissants (8) comprennent une plaque coulissante couplée au côté du siège, adaptée pour recevoir la toile de la ceinture (7) reposant librement sur elle, qui coulisse librement, réglant automatiquement le point de déviation (4).

3. Système de guidage pour ceintures de sécurité selon les revendications précédentes, **caractérisé en ce que** le second point de déviation (6) est situé à une hauteur supérieure à la hauteur du déplacement maximal du point de déviation (4) sur les éléments coulissants (8).

4. Système de guidage pour ceintures de sécurité selon les revendications 1 à 3, **caractérisé en ce que** le second point de déviation (6) est assemblé au siège.

5. Système de guidage pour ceintures de sécurité selon les revendications 1 à 3, **caractérisé en ce que** le second point de déviation fixe (6) est assemblé au véhicule.
